(19) Europäisches Patentamt
European Patent Office
Office européen des brevets

(11) **EP 3 485 563 B1**

(12) **EUROPÄISCHE PATENTSCHRIFT**

(45) Veröffentlichungstag und Bekanntmachung des Hinweises auf die Patenterteilung:
**15.04.2020 Patentblatt 2020/16**

(21) Anmeldenummer: **16763230.6**

(22) Anmeldetag: **01.09.2016**

(51) Int Cl.:
*H02M 7/00* (2006.01)     *H02M 7/68* (2006.01)
*H02M 7/757* (2006.01)     *H02J 3/36* (2006.01)
*H02M 1/00* (2006.01)

(86) Internationale Anmeldenummer:
**PCT/EP2016/070637**

(87) Internationale Veröffentlichungsnummer:
**WO 2018/041357 (08.03.2018 Gazette 2018/10)**

(54) **UMRICHTERANORDUNG SOWIE VERFAHREN ZU DEREN BETRIEB**

CONVERTER ASSEMBLY AND METHOD FOR OPERATING SAME

ENSEMBLE ONDULEUR ET PROCÉDÉ DE FONCTIONNEMENT DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.05.2019 Patentblatt 2019/21**

(73) Patentinhaber: **Siemens Aktiengesellschaft**
**80333 München (DE)**

(72) Erfinder:
• **HOFMANN, Viktor**
**95448 Bayreuth (DE)**
• **BAKRAN, Mark-Matthias**
**91052 Erlangen (DE)**
• **SCHÖN, Andre**
**91058 Erlangen (DE)**

(56) Entgegenhaltungen:
**WO-A1-2005/041300      WO-A1-2012/013245**

• **LANHUA ZHANG ET AL: "Voltage balancing control of a novel modular multilevel converter", ELECTRIC UTILITY DEREGULATION AND RESTRUCTURING AND POWER TECHNOLOGIES (DRPT), 2011 4TH INTERNATIONAL CONFERENCE ON, IEEE, 6. Juli 2011 (2011-07-06), Seiten 109-114, XP032039111, DOI: 10.1109/DRPT.2011.5993872 ISBN: 978-1-4577-0364-5**

EP 3 485 563 B1

**Beschreibung**

Die Erfindung bezieht sich auf ein Verfahren zum Ansteuern einer Umrichteranordnung sowie auf eine Umrichteranordnung, die entsprechend betrieben werden kann.

Die Druckschrift "Modular Multilevel Converter: An universal concept for HVDC-Networks and extended DC-Bus-applications" (R. Marquardt, The 2010 International Power Electronics Conference, Seiten 502 bis 507) offenbart ein Verfahren zum Betreiben einer Umrichteranordnung. Die vorbekannte Umrichteranordnung weist Reihenschaltungen auf, deren äußere Anschlüsse die Gleichspannungsanschlüsse der Umrichteranordnung bilden. Die Reihenschaltungen umfassen jeweils zwei in Reihe geschaltete Teilschaltungen, deren elektrische Verbindungsstellen jeweils einen Wechselspannungsanschluss der Umrichteranordnung bilden. Die Teilschaltungen weisen jeweils mindestens zwei in Reihe geschaltete Teilmodule mit jeweils mindestens zwei Schaltern und einem Kondensator auf. Die Ansteuerung der Umrichteranordnung erfolgt durch Ansteuerung der Teilmodule.

Weitere Verfahren zur Ansteuerung und Umrichteranordnungen werden in WO 2012/013245 A1, WO 2005/041300 A1 und in "Voltage balancing control of a novel modular multilevel converter" (Lanhua Zhang, et al., ELECTRIC UTILITY DEREGULATION AND RESTRUCTURING AND POWER TECHNOLOGIES (DRPT), 2011 4TH INTERNATIONAL CONFERENCE ON, IEEE) offenbart.

Der Erfindung liegt die Aufgabe zugrunde, ein Verfahren zum Ansteuern einer Umrichteranordnung anzugeben, bei dem für den Fall, dass mehr Teilmodule zur Verfügung stehen, als zum Schalten der jeweils nötigen Spannungen aktuell erforderlich sind, eine besonders geeignete Auswahl derjenigen Teilmodule bzw. derjenigen Kondensatoren erfolgt, die mittels der teilmoduleigenen Schalter eingeschaltet werden sollen oder eingeschaltet bleiben sollen.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass bei zumindest einer der Teilschaltungen mindestens ein Kondensator ausschließlich unipolar betrieben wird und mindestens ein Kondensator bipolar betrieben wird, wobei in einem Zeitbereich, in dem der zeitliche Mittelwert des Stromes durch die Teilschaltung ein anderes Vorzeichen als der jeweils aktuelle Strom durch die Teilschaltung aufweist, der oder die unipolar betriebenen Kondensatoren gegenüber dem oder den bipolar betriebenen Kondensatoren bevorzugt werden, nämlich bevorzugt eingeschaltet werden oder bevorzugt eingeschaltet bleiben.

Unter einem Einschalten eines Kondensators ist zu verstehen, dass dieser mittels der Schalter seines Teilmoduls in die Reihenschaltung elektrisch hineingeschaltet bzw. zu dieser zugeschaltet wird, so dass er nachfolgend die Spannung an der Reihenschaltung in Abhängigkeit von seiner Kondensatorspannung beeinflusst. Unter einem Ausschalten des Kondensators ist zu verstehen, dass dieser mittels der Schalter seines Teilmoduls von der Reihenschaltung elektrisch abgetrennt wird.

Ein wesentlicher Vorteil des erfindungsgemäßen Verfahrens ist darin zu sehen, dass dieses einen Betrieb unter gleichmäßiger Heranziehung und damit ähnlicher elektrischer und thermischer Belastung aller Teilmodule beispielsweise auch für den Fall ermöglicht, dass die Anordnung mit einem Modulationsindex größer als 1 betrieben wird und in den Teilmodulen Kondensatoren vorhanden sind, die nur unipolar betrieben werden sollen oder können, sowie solche, die bipolar betrieben werden. Durch die erfindungsgemäße Bevorzugung der unipolar betriebenen Kondensatoren gegenüber den bipolar betriebenen Kondensatoren, dass unipolar betriebene Kondensatoren nur unterrepräsentiert am Betrieb teilnehmen und die bipolar betriebenen Kondensatoren überdurchschnittlich belastet werden. Der zeitliche Mittelwert des Stromes durch die Teilmodule ist in der Regel nicht Null, sondern um einen Offset verschoben, so dass die Zeitspannen mit positivem Stromfluss und negativem Stromfluss ungleich lang sind. Beispielsweise im Falle eines Modulationsindexes größer als 1 sind unipolar betriebene Kondensatoren bei einer Polarität, die der - im zeitlichen Verlauf gesehen - Hauptstromrichtung entgegengesetzt ist, energetisch begrenzt und können nur in relativ kurzen Zeitbereichen geladen bzw. entladen werden, nämlich jeweils dann, wenn der zeitliche Mittelwert des Stromes durch die Teilschaltung ein anderes Vorzeichen als der jeweils aktuelle Strom durch die Teilschaltung aufweist. Durch Bevorzugung der unipolar betriebenen Kondensatoren bzw. der Teilmodule mit den unipolar betriebenen Kondensatoren in den Zeitbereichen, in denen diese energetisch begrenzt sind, gegenüber den bipolar betriebenen Kondensatoren bzw. den Teilmodulen mit den bipolar betriebenen Kondensatoren wird das skizzierte Problem deutlich gemindert.

Wie oben angedeutet, ist es besonders vorteilhaft, wenn das beschriebene Verfahren, also das Bevorzugen der unipolar betriebenen Kondensatoren gegenüber den bipolar betriebenen Kondensatoren, durchgeführt wird, wenn die Teilschaltung mit einem Modulationsindex größer als 1 betrieben wird.

Der Modulationsindex ergibt sich aus dem Quotienten zwischen der doppelten Amplitude bzw. dem doppelten Scheitelwert der Wechselspannung auf der Wechselspannungsseite der Umrichteranordnung und der Gleichspannung auf der Gleichspannungsseite der Umrichteranordnung. Der Modulationsindex berechnet sich also gemäß:

$$M = 2\ \hat{U}_L\ /\ \text{Udc}$$

wobei M den Modulationsindex und Udc die Gleichspannung zwischen den Gleichspannungsanschlüssen der Umrichteranordnung bezeichnet. $\hat{U}_L$ bezeichnet den Scheitelwert bzw. die Amplitude der Spannung zwischen dem oder den Wechselspannungsanschlüssen und dem Potentialmittelpunkt auf der Gleichspannungsseite. Der Potentialmittelpunkt entspricht dem mittleren Potential zwischen den Gleichspannungsanschlüssen.

Die Ansteuerung der Teilschaltung erfolgt vorzugsweise in einer Auswahlschleife, die zeitlich nacheinander wiederholt durchlaufen wird bzw. wiederholt durchgeführt wird, wobei in jedem Auswahlschleifendurchlauf jeweils ermittelt wird, ob zum Einstellen einer vorgegebenen Teilschaltungssollspannung Kondensatoren zugeschaltet oder abgeschaltet werden müssen.

In der Auswahlschleife wird vorzugsweise geprüft, ob diese in dem genannten Zeitbereich - also in dem Zeitbereich, in dem der zeitliche Mittelwert des Stromes durch die Teilschaltung ein anderes Vorzeichen als der jeweils aktuelle Strom durch die Teilschaltung aufweist - durchgeführt wird:

Falls dies der Fall ist, werden die unipolar betriebenen Kondensatoren gegenüber den bipolar betriebenen Kondensatoren in der Auswahlschleife bevorzugt, nämlich insbesondere bevorzugt eingeschaltet oder bevorzugt eingeschaltet gelassen; anderenfalls werden die unipolar betriebenen Kondensatoren und diejenigen bipolar betriebenen Kondensatoren, die mit derselben Polarität wie die unipolar betriebenen Kondensatoren betrieben werden, in der Auswahlschleife gleich behandelt, insbesondere lediglich mit Blick auf ihre Kondensatorspannungen eingeschaltet, eingeschaltet gelassen oder abgeschaltet.

Vorteilhaft ist, wenn in der Auswahlschleife zunächst eine Sortierliste mit einer Priorisierung der Kondensatoren erstellt wird, anhand der Priorisierung in der Sortierliste die für das Erreichen der vorgegebenen Teilschaltungssollspannung ab- oder zuzuschaltenden Kondensatoren ermittelt werden und das Ab- oder Zuschalten der Kondensatoren gemäß dem Ermittlungsergebnis des Ermittlungsschritts erfolgt.

Im Falle, dass in dem genannten Zeitbereich die aktuelle Teilschaltungsspannung die vorgegebene Teilschaltungssollspannung überschreitet, werden vorzugsweise alle eingeschalteten bipolar betriebenen Kondensatoren als mit größerer Priorität abzuschaltende Kondensatoren auf die Sortierliste aufgenommen als die eingeschalteten unipolar betriebenen Kondensatoren, wobei auf der Sortierliste die Reihenfolge der bipolar betriebenen Kondensatoren untereinander gemäß deren Kondensatorspannung und die Reihenfolge der unipolar betriebenen Kondensatoren untereinander ebenfalls gemäß deren Kondensatorspannung sortiert wird. Die endgültige Auswahl der abzuschaltenden Kondensatoren erfolgt bevorzugt gemäß der Reihenfolge auf der Sortierliste - also beginnend mit den bipolar betriebenen Kondensatoren und erst anschließend mit den unipolar betriebenen Kondensatoren -, bis die Summe der Kondensatorspannungen der verbleibenden Kondensatoren der vorgegebenen Teilschaltungssollspannung entspricht, oder zumindest bis auf einen vorgegebenen Restfehler entspricht, oder diese unterschreitet.

Im Falle, dass in dem genannten Zeitbereich die aktuelle Teilschaltungsspannung die vorgegebene Teilschaltungssollspannung unterschreitet, werden vorzugsweise alle ausgeschalteten unipolar betriebenen Kondensatoren als mit größerer Priorität einzuschaltende Kondensatoren auf die Sortierliste aufgenommen als die ausgeschalteten bipolar betriebenen Kondensatoren, wobei die Reihenfolge der unipolar betriebenen Kondensatoren untereinander gemäß deren Kondensatorspannung und die Reihenfolge der bipolar betriebenen Kondensatoren untereinander ebenfalls gemäß deren Kondensatorspannung sortiert wird. Die endgültige Auswahl der einzuschaltenden Kondensatoren erfolgt bevorzugt gemäß der Reihenfolge auf der Sortierliste, - also beginnend mit den unipolar betriebenen Kondensatoren und erst anschließend mit den bipolar betriebenen Kondensatoren -, bis die Summe der Kondensatorspannungen der ausgewählten Kondensatoren der vorgegebenen Teilschaltungssollspannung entspricht, oder zumindest bis auf einen vorgegebenen Restfehler entspricht, oder diese überschreitet.

Als besonders vorteilhaft wird es angesehen, wenn die Auswahl der abzuschaltenden bipolar betriebenen Kondensatoren gemäß deren Kondensatorspannungen erfolgt, wobei die Auswahlrichtung, also ob bipolare Kondensatoren mit größerer Kondensatorspannung gegenüber denen mit kleinerer Kondensatorspannung zuerst ausgewählt werden, in Abhängigkeit von der Leistungsflussrichtung der Umrichteranordnung, in Abhängigkeit von der Stromrichtung durch die Teilschaltung und in Abhängigkeit davon, ob die aktuelle Teilschaltungsspannung die vorgegebene Teilschaltungssollspannung über- oder unterschreitet, festgelegt wird.

Die Auswahl der abzuschaltenden unipolar betriebenen Kondensatoren erfolgt bevorzugt ebenfalls gemäß deren Kondensatorspannungen, wobei die Auswahlrichtung, also ob unipolare Kondensatoren mit größerer Kondensatorspannung gegenüber denen mit kleinerer Kondensatorspannung zuerst ausgewählt werden, in Abhängigkeit von der Leistungsflussrichtung der Umrichteranordnung, in Abhängigkeit von der Stromrichtung durch die Teilschaltung und in Abhängigkeit davon, ob die aktuelle Teilschaltungsspannung die vorgegebene Teilschaltungssollspannung über- oder unterschreitet, festgelegt wird.

In der Auswahlschleife wird bevorzugt jeweils eine fiktive Kondensatorgruppe gebildet, die aus den eingeschalteten uni- und bipolar betriebenen Kondensatoren sowie einer fest vorgegebenen Maximalzahl an auszuwählenden, aber noch ausgeschalteten unipolar betriebenen Kondensatoren zusammengesetzt wird. Die Kondensatorspannungen der fiktiven Kondensatorgruppe werden bevorzugt unter Bildung eines fiktiven Spannungswerts addiert.

Der fiktive Spannungswert wird vorzugsweise als aktuelle Teilschaltungsspannung angesehen und als die aktuelle Teilschaltungsspannung für den oben bereits erläuterten Vergleich mit der Teilschaltungssollspannung herangezogen. Der Vergleich erfolgt somit bei dieser Variante nicht anhand der Summe der Kondensatorspannungen der eingeschalteten Kondensatoren der Teilschaltung, sondern anhand der fiktiven Summe der Kondensatorspannungen der Kondensatoren der Kondensatorgruppe, obwohl diese auch "noch" ausgeschaltete Kondensatoren umfasst.

Die Auswahl der auszuwählenden, aber noch ausgeschalteten unipolar betriebenen Kondensatoren aus der Gesamtgruppe der ausgeschalteten unipolar betriebenen Kondensatoren erfolgt bevorzugt gemäß deren Kondensatorspannungen.

Die fiktive Kondensatorgruppe wird bevorzugt mit denjenigen abgeschalteten, unipolaren Kondensatoren gebildet, die im Falle einer Leistungsflussrichtung der Umrichteranordnung in Richtung der Gleichspannungsanschlüsse die kleinsten Kondensatorspannungen aufweisen und im Falle einer Leistungsflussrichtung der Umrichteranordnung in Richtung des oder der Wechselspannungsanschlüsse die größten Kondensatorspannungen aufweisen.

Bei der Erstellung der Sortierliste werden vorzugsweise alle Kondensatoren der fiktiven Kondensatorgruppe auf der Sortierliste aufgenommen werden, wobei die ausgewählten, aber physikalisch noch ausgeschalteten unipolar betriebenen Kondensatoren auf der Sortierliste als eingeschaltete, unipolar betriebene Kondensatoren, also genauso wie die physikalisch eingeschalteten unipolar betriebenen Kondensatoren behandelt werden.

Darüber hinaus ist es vorteilhaft, wenn in der Auswahlschleife in einem Ermittlungsschritt anhand der Sortierung der Sortierliste die für das Erreichen der vorgegebenen Teilschaltungssollspannung ab- oder zuzuschaltenden Kondensatoren ermittelt werden und in einem Umsetzschritt das Ab- oder Zuschalten der Kondensatoren gemäß dem Ermittlungsergebnis des Ermittlungsschritts erfolgt, wobei die ausgewählten, aber physikalisch noch ausgeschalteten unipolar betriebenen Kondensatoren ausgeschaltet bleiben, wenn sie gemäß dem Ermittlungsergebnis auszuschalten wären und eingeschaltet werden, wenn sie gemäß dem Ermittlungsergebnis eingeschaltet bleiben sollen.

Alle unipolar betriebenen Kondensatoren der Teilschaltung werden vorzugsweise mit derselben Polarität betrieben.

Die Erfindung bezieht sich darüber hinaus auf eine Umrichteranordnung, die zumindest einen Wechselspannungsanschluss, an dem ein Wechselstrom eingespeist oder entnommen werden kann, und zumindest zwei Gleichspannungsanschlüsse, an denen ein Gleichstrom eingespeist oder entnommen werden kann, aufweist, wobei die Umrichteranordnung mindestens eine Reihenschaltung umfasst, deren äußere Anschlüsse die Gleichspannungsanschlüsse der Umrichteranordnung bilden, die Reihenschaltung zwei in Reihe geschaltete Teilschaltungen umfasst, deren elektrische Verbindungsstelle den oder einen der Wechselspannungsanschlüsse der Umrichteranordnung bildet, und die Teilschaltungen jeweils mindestens zwei in Reihe geschaltete Teilmodule umfassen, die jeweils mindestens zwei Schalter und einen Kondensator aufweisen, und wobei die Umrichteranordnung eine Steuereinrichtung zum Ansteuern der Teilmodule aufweist.

Erfindungsgemäß ist vorgesehen, dass die Steuereinrichtung derart ausgestaltet ist, dass sie die Teilmodule, insbesondere deren den jeweiligen Kondensator ein- oder ausschaltenden Schalter, gemäß einem Verfahren wie oben erläutert ansteuern kann.

Bezüglich der Vorteile der erfindungsgemäßen Umrichteranordnung sei auf die obigen Ausführungen verwiesen.

Die Steuereinrichtung weist vorzugsweise eine Recheneinrichtung sowie einen Speicher auf. In dem Speicher ist vorzugsweise ein Steuerprogrammmodul gespeichert, das die Arbeitsweise der Recheneinrichtung bestimmt, und zwar derart, dass die Recheneinrichtung bei Ausführung des Steuerprogrammmoduls ein Ansteuerverfahren wie oben erläutert durchführen kann.

Die Erfindung wird nachfolgend anhand von Ausführungsbeispielen näher erläutert; dabei zeigen beispielhaft

Figur 1     ein Ausführungsbeispiel für eine erfindungsgemäße Umrichteranordnung,

Figur 2     ein Ausführungsbeispiel für ein Teilmodul, das zur Bildung von Teilschaltungen bei der Umrichteranordnung gemäß Figur 1 eingesetzt werden kann,

Figur 3     ein weiteres Ausführungsbeispiel für ein Teilmodul, das zur Bildung von Teilschaltungen bei der Umrichteranordnung gemäß Figur 1 eingesetzt werden kann,

Figur 4     beispielhaft den Verlauf von Spannung und Strom an bzw. durch eine der Teilschaltungen der Umrichteranordnung gemäß Figur 1 und

Figur 5     beispielhaft ein mögliches Betriebsverfahren zum Ansteuern der Umrichteranordnung gemäß Figur 1.

In den Figuren werden der Übersicht halber für identische oder vergleichbare Komponenten stets dieselben Bezugszeichen verwendet.

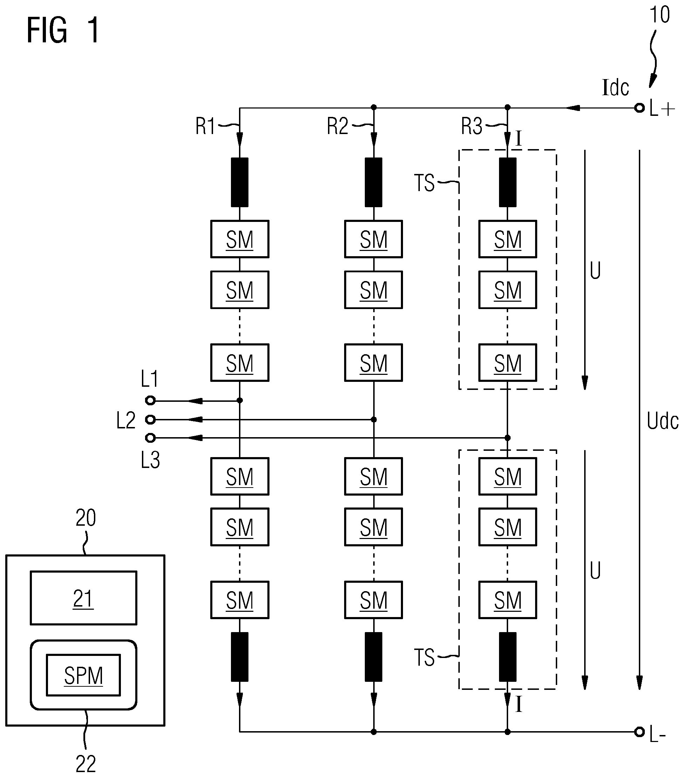

Die Figur 1 zeigt eine Umrichteranordnung 10, die drei Wechselspannungsanschlüsse L1, L2 und L3 aufweist, an denen jeweils ein Wechselstrom in die Umrichteranordnung 10 eingespeist oder aus dieser entnommen werden kann. Zwei Gleichspannungsanschlüsse, an denen ein Gleichstrom Idc in die Umrichteranordnung 10 eingespeist oder aus dieser entnommen werden kann, sind in der Figur 1 mit dem Bezugszeichen L+ und L- gekennzeichnet. Die Gleichspannung an den Gleichspannungsanschlüssen L+ und L- trägt das Bezugszeichen Udc.

Die Umrichteranordnung 10 weist drei Reihenschaltungen R1, R2 und R3 auf, deren äußere Anschlüsse die Gleichspannungsanschlüsse L+ und L- der Umrichteranordnung 10 bilden. Die Reihenschaltungen R1, R2 und R3 umfassen jeweils zwei in Reihe geschaltete Teilschaltungen TS.

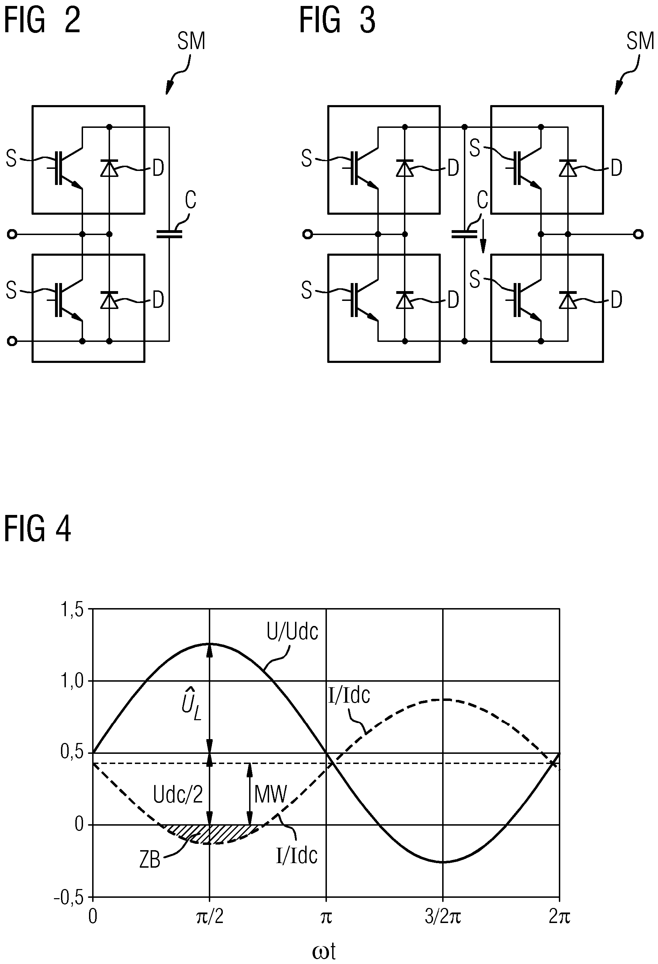

Jede der Teilschaltungen TS weist jeweils mindestens zwei in Reihe geschaltete Teilmodule SM auf, die jeweils mindestens zwei Schalter und einen Kondensator umfassen. Ausführungsbeispiele für geeignete Teilmodule SM werden nachfolgend beispielhaft im Zusammenhang mit den Figuren 2 und 3 erläutert.

Die Umrichteranordnung 10 weist eine Steuereinrichtung 20 auf, die zur Ansteuerung der Teilmodule SM und damit zur Ansteuerung der Teilschaltungen TS geeignet ist. Die Steuereinrichtung 20 weist zu diesem Zweck eine Recheneinrichtung 21 sowie einen Speicher 22 auf. In dem Speicher 22 ist ein Steuerprogrammmodul SPM gespeichert, das die Arbeitsweise der Recheneinrichtung 21 bestimmt.

Jede der Teilschaltungen TS der drei Reihenschaltungen R1, R2 und R3 weist jeweils mindestens einen Kondensator auf, der ausschließlich unipolar betrieben wird oder ausschließlich unipolar betrieben werden kann, und mindestens einen Kondensator auf, der bipolar betrieben wird.

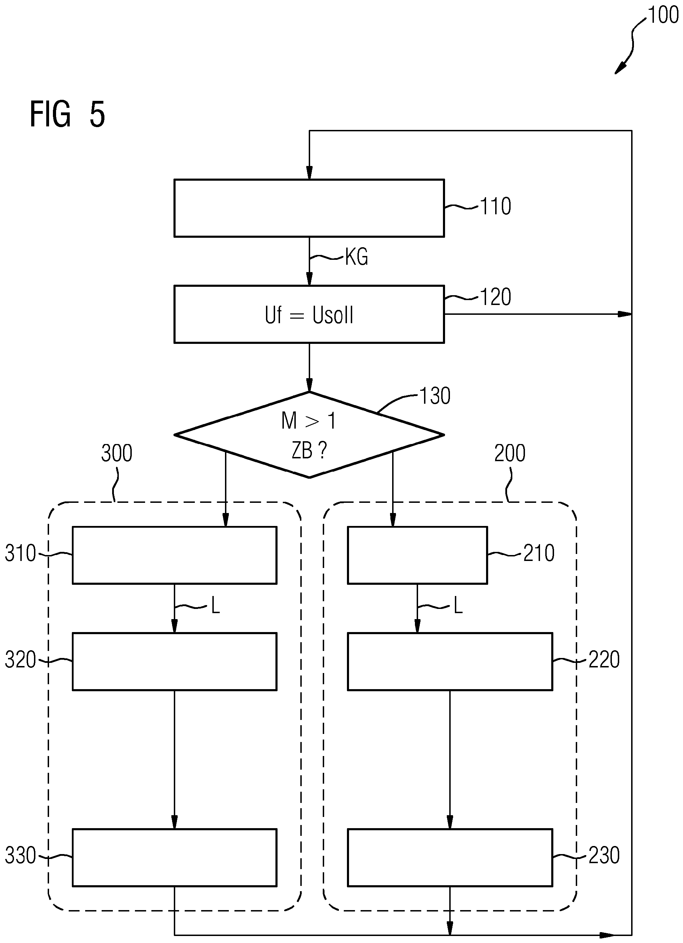

Ein mögliches Betriebsverfahren für die Umrichteranordnung 10 wird weiter unten im Zusammenhang mit der Figur 5 näher erläutert. Mit Blick auf die Polaritäten wird im Zusammenhang mit der Figur 5 davon ausgegangen, dass die unipolar betriebenen Kondensatoren mit einer positiven Spannung entlang der Pfeilrichtung der Spannung U in Figur 1 betrieben werden. Die Stromrichtung des Stromes durch die Teilschaltungen TS gilt als positiv, wenn dieser entlang der Pfeilrichtung des Stromes I in Figur 1 fließt. Die Leistungsflussrichtung gilt als positiv, wenn die Leistung von der Gleichspannungsseite zur Wechselspannungsseite der Umrichteranordnung 10 fließt.

Die Figur 2 zeigt ein Ausführungsbeispiel für ein Teilmodul SM, das zwei Schalter S, zwei Dioden D sowie einen Kondensator C umfasst. Die genannten Komponenten bilden eine Halbbrückenschaltung, die durch Ansteuern der Schalter S - seitens der Steuereinrichtung 20 gemäß Figur 1 - einen lediglich bzw. ausschließlich unipolaren Betrieb des Kondensators C ermöglicht. Zumindest eines der Teilmodule SM einer jeden Teilschaltung TS gemäß Figur 1 ist vorzugsweise so wie in Figur 2 dargestellt ausgestaltet.

Die Figur 3 zeigt ein Ausführungsbeispiel für ein Teilmodul SM, das vier Schalter S, vier Dioden D sowie einen Kondensator C umfasst. Die genannten Komponenten bilden eine Vollbrückenschaltung, die durch Ansteuern der Schalter S - seitens der Steuereinrichtung 20 gemäß Figur 1 - einen bipolaren Betrieb des Kondensators C ermöglicht. Mindestens eines der Teilmodule SM einer jeden Teilschaltung TS der Umrichteranordnung 10 gemäß Figur 1 ist vorzugsweise so ausgestaltet, wie dies in Figur 3 gezeigt ist.

Die Figur 4 zeigt einen möglichen Betrieb der Umrichteranordnung 10 gemäß Figur 1, bei der der Modulationsindex größer als 1 ist. Der Modulationsindex M ist größer als 1, wenn gilt:

$$M = 2 \ \hat{U}_L \ / \ Udc > 1$$

wobei M den Modulationsindex und Udc die Gleichspannung zwischen den Gleichspannungsanschlüssen der Umrichteranordnung bezeichnet. $\hat{U}_L$ bezeichnet den Scheitelwert bzw. die Amplitude der Spannung zwischen den Wechselspannungsanschlüssen L1, L2 bzw. L3 und dem Potentialmittelpunkt auf der Gleichspannungsseite. Der Potentialmittelpunkt auf der Gleichspannungsseite entspricht dem mittleren Potential zwischen den Gleichspannungsanschlüssen L+ und L- und somit dem Potential an dem Gleichspannungsanschluss L+ verschoben um -Udc/2 bzw. dem Potential an dem Gleichspannungsanschluss L- verschoben um +Udc/2.

Die Figur 4 zeigt beispielhaft den Verlauf der Spannung U an einer der Teilschaltungen TS gemäß Figur 1 und den Strom I durch diese Teilschaltung TS, jeweils normiert auf die Spannung Udc und den Strom Idc. Es lässt sich in der Figur 4 erkennen, dass es periodisch wiederkehrend einen Zeitbereich ZB gibt, in dem der zeitliche Mittelwert MW des Stromes I durch die Teilschaltung TS ein anderes Vorzeichen als der jeweils aktuelle Strom I durch die Teilschaltung aufweist.

In den Zeitbereichen ZB werden die unipolar betriebenen Kondensatoren gegenüber den bipolar betriebenen Kondensatoren vorzugsweise bevorzugt behandelt, nämlich bevorzugt eingeschaltet, falls diese zuvor ausgeschaltet waren, oder bevorzugt eingeschaltet gelassen, wenn sie zum jeweiligen Zeitpunkt eingeschaltet waren. Das Ein- bzw. Ausschalten der Kondensatoren erfolgt mittels der Schalter S der jeweiligen Teilmodule SM gemäß den Figuren 2 und 3.

Im Zusammenhang mit der Figur 5 wird nachfolgend ein bevorzugtes Betriebsverfahren zur Ansteuerung der Umrichteranordnung 10 gemäß Figur 1 näher erläutert:

Die Ansteuerung der Umrichteranordnung 10 gemäß Figur 1 erfolgt vorzugsweise in einer Auswahlschleife 100, die nacheinander wiederholt durchlaufen wird.

Die Auswahlschleife 100 umfasst einen Gruppenbildungsschritt 110, in dem eine fiktive Kondensatorgruppe KG gebildet wird, die aus den jeweils eingeschalteten unipolar betriebenen und den jeweils eingeschalteten bipolar betriebenen sowie einer fest vorgegebenen Maximalzahl an auszuwählenden, aber noch ausgeschalteten unipolar betriebenen Kondensatoren zusammengesetzt wird.

Die Auswahl der auszuwählenden, aber noch ausgeschalteten unipolar betriebenen Kondensatoren aus der Gesamtgruppe der ausgeschalteten unipolar betriebenen Kondensatoren erfolgt vorzugsweise in Abhängigkeit von deren jeweiliger Kondensatorspannung, wie folgt:

Im Falle einer Leistungsflussrichtung der Umrichteranordnung 10 gemäß Figur 1 in Richtung der Gleichspannungsanschlüsse L+ und L- werden vorzugsweise diejenigen abgeschalteten unipolaren Kondensatoren in die fiktive Kondensatorgruppe KG aufgenommen, die die kleinsten Kondensatorspannungen aufweisen.

Im Falle einer Leistungsflussrichtung der Umrichteranordnung 10 in Richtung des oder der Wechselspannungsanschlüsse L1, L2 und L3 wird die fiktive Kondensatorgruppe KG vorzugsweise mit denjenigen abgeschalteten unipolaren Kondensatoren gebildet, die die größten Kondensatorspannungen aufweisen.

In einem nachfolgenden Spannungsvergleichsschritt 120 werden die Kondensatorspannungen der Kondensatoren der fiktiven Kondensatorgruppe KG unter Bildung eines fiktiven Spannungswerts Uf addiert, für den nachfolgend angenommen wird, dass er die aktuelle Teilschaltungsspannung U an der Teilschaltung TS repräsentiert, was wegen der zusätzlich ausgewählten, aber tatsächlich noch ausgeschalteten unipolar betriebenen Kondensatoren selbstverständlich nicht der Fall ist und hier also nur zur Durchführung des Verfahrens nachfolgend so angenommen wird.

Der fiktive Spannungswert Uf wird im Rahmen des Spannungsvergleichsschritts 120 mit einer für die Teilschaltung TS vorgegebenen Teilschaltungssollspannung Usoll verglichen. Im Falle, dass der fiktive Spannungswert Uf der vorgegebenen Teilschaltungssollspannung Usoll entspricht, werden alle Kondensatoren der fiktiven Kondensatorgruppe KG eingeschaltet bzw. eingeschaltet belassen, und es wird zum Gruppenbildungsschritt 110 zurückgesprungen.

Falls der fiktive Spannungswert Uf von dem vorgegebenen Teilschaltungssollspannungswert abweicht, wird zu einem Sonderbehandlungsprüfschritt 130 übergegangen.

Im Sonderbehandlungsprüfschritt 130 wird geprüft, ob die Umrichteranordnung 10 gemäß Figur 1 mit einem Modulationsindex M größer als 1 betrieben wird. Ist dies der Fall, so wird geprüft, ob die Ansteuerung in dem Zeitbereich ZB erfolgt, der in Figur 4 markiert ist, also in dem Zeitbereich, in dem der zeitliche Mittelwert MW des Stromes I durch die Teilschaltung TS ein anderes Vorzeichen als der jeweils aktuelle Strom I durch die Teilschaltung aufweist.

Wird in dem Sonderbehandlungsprüfschritt 130 festgestellt, dass die Ansteuerung in dem Zeitbereich ZB erfolgt, so erfolgt die weitere Ansteuerung gemäß einem Sonderbehandlungspfad 200. Andernfalls erfolgt die weitere Ansteuerung der Umrichteranordnung 10 gemäß einem Normalbehandlungspfad 300.

In dem Sonderbehandlungspfad 200 wird zunächst im Rahmen eines Sortierlistenschritts 210 eine Sortierliste L erzeugt, in der die Kondensatoren der fiktiven Kondensatorgruppe KG mit einer Priorisierung aufgelistet werden. Die Auflistung erfolgt dabei in Gruppen, wobei bipolar betriebene Kondensatoren und unipolar betriebene Kondensatoren in separaten Untergruppen aufgenommen werden. Die Bildung der Untergruppen und die Bildung der Priorisierung erfolgt dabei vorzugsweise wie folgt:

Im Falle, dass in dem Zeitbereich ZB der fiktive Spannungswert Uf die vorgegebene Teilschaltungssollspannung Usoll überschreitet, werden alle eingeschalteten bipolar betriebenen Kondensatoren als mit größerer Priorität abzuschaltende Kondensatoren auf die Sortierliste aufgenommen werden als die eingeschalteten unipolar betriebenen Kondensatoren, wobei auf der Sortierliste die Reihenfolge der bipolar betriebenen Kondensatoren untereinander gemäß deren Kondensatorspannung und die Reihenfolge der unipolar betriebenen Kondensatoren untereinander ebenfalls gemäß deren Kondensatorspannung sortiert wird

Im Falle, dass in dem genannten Zeitbereich der fiktive Spannungswert Uf die vorgegebene Teilschaltungssollspannung unterschreitet, werden alle ausgeschalteten unipolar betriebenen Kondensatoren als mit größerer Priorität einzuschaltende Kondensatoren auf die Sortierliste aufgenommen als die ausgeschalteten bipolar betriebenen Kondensatoren, wobei die Reihenfolge der unipolar betriebenen Kondensatoren untereinander gemäß deren Kondensatorspannung und die Reihenfolge der bipolar betriebenen Kondensatoren untereinander ebenfalls gemäß deren Kondensatorspannung sortiert wird.

Die Sortierung der unipolar und bipolar betriebenen Kondensatoren erfolgt in ihrer jeweiligen Untergruppe jeweils bevorzugt in aufsteigender Richtung zu höheren Kondensatorspannungen,

- wenn die Leistungsflussrichtung positiv, die Stromrichtung negativ und die aktuelle Teilschaltungsspannung (bzw. der fiktive Spannungswert Uf) die vorgegebene Teilschaltungssollspannung Usoll überschreitet und
- wenn die Leistungsflussrichtung negativ, die Stromrichtung positiv und die aktuelle Teilschaltungsspannung (bzw. der fiktive Spannungswert Uf) die vorgegebene Teilschaltungssollspannung Usoll unterschreitet.

Andernfalls erfolgt die Sortierung in umgekehrter Richtung.

In einem nachfolgenden Ermittlungsschritt 220 wird festgestellt, welche der Kondensatoren der Sortierliste L eingeschaltet werden sollen, eingeschaltet bleiben sollen, ausgeschaltet werden sollen oder ausgeschaltet bleiben sollen. Die Auswahl der Kondensatoren aus der Sortierliste L erfolgt dabei wie folgt:

Im Falle, dass in dem genannten Zeitbereich ZB die aktuelle Teilschaltungsspannung (bzw. der fiktive Spannungswert Uf) die vorgegebene Teilschaltungssollspannung Usoll überschreitet, erfolgt die endgültige Auswahl der abzuschaltenden Kondensatoren gemäß der Reihenfolge auf der Sortierliste - also beginnend mit den bipolar betriebenen Kondensatoren und erst anschließend mit den unipolar betriebenen Kondensatoren -, bis die Summe der Kondensatorspannungen der verbleibenden Kondensatoren der vorgegebenen Teilschaltungssollspannung Usoll entspricht, oder zumindest bis auf einen vorgegebenen Restfehler entspricht, oder diese unterschreitet.

Im Falle, dass in dem genannten Zeitbereich ZB die aktuelle Teilschaltungsspannung (bzw. der fiktive Spannungswert Uf) die vorgegebene Teilschaltungssollspannung Usoll unterschreitet, erfolgt die endgültige Auswahl der einzuschaltenden Kondensatoren gemäß der Reihenfolge auf der Sortierliste, - also beginnend mit den unipolar betriebenen Kondensatoren und erst anschließend mit den bipolar betriebenen Kondensatoren -, bis die Summe der Kondensatorspannungen der ausgewählten Kondensatoren der vorgegebenen Teilschaltungssollspannung Usoll entspricht, oder zumindest bis auf einen vorgegebenen Restfehler entspricht, oder diese überschreitet.

Die Auswahl der unipolar und bipolar betriebenen Kondensatoren innerhalb der jeweiligen Untergruppe erfolgt also bevorzugt entlang der oben erläuterten bevorzugten Sortierreihenfolge der Sortierliste L oder mit anderen Worten in aufsteigender Richtung zu höheren Kondensatorspannungen,

- wenn die Leistungsflussrichtung positiv, die Stromrichtung negativ und die aktuelle Teilschaltungsspannung (bzw. der fiktive Spannungswert Uf) die vorgegebene Teilschaltungssollspannung Usoll überschreitet und
- wenn die Leistungsflussrichtung negativ, die Stromrichtung positiv und die aktuelle Teilschaltungsspannung (bzw. der fiktive Spannungswert Uf) die vorgegebene Teilschaltungssollspannung Usoll unterschreitet.

Andernfalls erfolgt die Auswahl in umgekehrter Richtung, also in absteigender Richtung zu niedrigeren Kondensatorspannungen.

Mit Blick auf die Polaritäten bzw. Richtungen wird hier beispielhaft davon ausgegangen, dass positive Spannungen solche entlang der Pfeilrichtung der Spannung U in Figur 1 sind. Die Stromrichtung des Stromes durch die Teilschaltungen TS gilt als positiv, wenn dieser entlang der Pfeilrichtung des Stromes I in Figur 1 fließt. Die Leistungsflussrichtung gilt als positiv, wenn die Leistung von der Gleichspannungsseite zur Wechselspannungsseite der Umrichteranordnung 10 fließt.

In einem nachfolgenden Umsetzschritt 230 erfolgt das Ab- oder Zuschalten der Kondensatoren gemäß dem Ermittlungsergebnis des Ermittlungsschrittes 220. Dabei bleiben die ausgewählten, aber physikalisch noch ausgeschalteten unipolar betriebenen Kondensatoren ausgeschaltet, wenn sie gemäß dem Ermittlungsergebnis auszuschalten wären, und werden eingeschaltet, wenn sie gemäß dem Ermittlungsergebnis eingeschaltet bleiben sollen.

Nach Durchführung des Umsetzschrittes 230 wird zum Gruppenbildungsschritt 110 zurückgesprungen, und die Auswahlschleife 100 wird anschließend in einem neuen Schleifendurchlauf erneut durchlaufen.

Falls im Sonderbehandlungsprüfschritt 130 festgestellt wird, dass die Umrichteranordnung nicht in dem Zeitbereich ZB betrieben wird, so erfolgt in einem Sortierlistenschritt 310 vorzugsweise die Bildung einer Sortierliste L derart, dass die unipolar betriebenen Kondensatoren und die mit derselben Polarität betriebenen bipolar betriebenen Kondensatoren gleich behandelt werden. Eine unterschiedliche Behandlung der Kondensatoren wird vorzugsweise nur hinsichtlich einer Unterscheidung zwischen tatsächlich betriebenen bipolaren Kondensatoren und inaktiven bipolar betriebenen Kondensatoren durchgeführt.

Im Falle, dass die aktuelle Teilschaltungsspannung (bzw. der fiktive Spannungswert Uf) die vorgegebene Teilschaltungssollspannung Usoll überschreitet, werden vorzugsweise die eingeschalteten unipolar betriebenen Kondensatoren und die mit derselben Polarität betriebenen bipolaren Kondensatoren ausgeschaltet, bevor mit negativer Polarität betriebene bipolare Kondensatoren zugeschaltet werden.

Im Falle, dass die aktuelle Teilschaltungsspannung (bzw. der fiktive Spannungswert Uf) die vorgegebene Teilschaltungssollspannung Usoll unterschreitet, werden vorzugsweise die eingeschalteten und mit negativer Polarität betriebenen bipolaren Kondensatoren ausgeschaltet, bevor unipolar betriebene Kondensatoren und mit derselben Polarität betriebene bipolare Kondensatoren zugeschaltet werden.

Nach der Auswahl der ab- oder zuzuschaltenden Kondensatoren in einem Ermittlungsschritt 320 wird in einem nachfolgenden Umsetzschritt 330 das Ab- oder Zuschalten vollzogen. Nachfolgend wird wieder zum Gruppenbildungsschritt 110 zurückgesprungen, und es wird die Auswahlschleife 100 nachfolgend erneut durchlaufen.

Bezugszeichenliste

| | |
|---|---|
| 10 | Umrichteranordnung |
| 20 | Steuereinrichtung |
| 21 | Recheneinrichtung |
| 22 | Speicher |
| 100 | Auswahlschleife |
| 110 | Gruppenbildungsschritt |
| 120 | Spannungsvergleichsschritt |

| 130 | Sonderbehandlungsprüfschritt |
| 200 | Sonderbehandlungspfad |
| 210 | Sortierlistenschritt |
| 220 | Ermittlungsschritt |
| 230 | Umsetzschritt |
| 300 | Normalbehandlungspfad |
| 310 | Sortierlistenschritt |
| 320 | Ermittlungsschritt |
| 330 | Umsetzschritt |
| C | Kondensator |
| D | Diode |
| I | Strom |
| Idc | Gleichstrom |
| KG | fiktive Kondensatorgruppe |
| L | Sortierliste |
| L1 | Wechselspannungsanschluss |
| L2 | Wechselspannungsanschluss |
| L3 | Wechselspannungsanschluss |
| L+ | Gleichspannungsanschluss |
| L- | Gleichspannungsanschluss |
| M | Modulationsindex |
| MW | Mittelwert |
| R1 | Reihenschaltung |
| R2 | Reihenschaltung |
| R3 | Reihenschaltung |
| S | Schalter |
| SPM | Steuerprogrammmodul |
| SM | Teilmodul |
| TS | Teilschaltung |
| U | Spannung |
| Uf | fiktiver Spannungswert |
| Udc | Gleichspannung an den Gleichspannungsanschlüssen |
| $\hat{U}_L$ | Scheitelwert der Spannung an den Wechselspannungsanschlüssen |
| Usoll | Teilschaltungssollspannung |
| ZB | Zeitbereich |

**Patentansprüche**

1. Verfahren zum Ansteuern einer Umrichteranordnung (10), die zumindest einen Wechselspannungsanschluss (L1, L2, L3), an dem ein Wechselstrom eingespeist oder entnommen werden kann, und zumindest zwei Gleichspannungsanschlüsse (L+, L-), an denen ein Gleichstrom eingespeist oder entnommen werden kann, aufweist

   - wobei die Umrichteranordnung (10) mindestens eine Reihenschaltung (R1, R2, R3) umfasst, deren äußere Anschlüsse die Gleichspannungsanschlüsse (L+, L-) der Umrichteranordnung (10) bilden, die Reihenschaltung (R1, R2, R3) zwei in Reihe geschaltete Teilschaltungen (TS) umfasst, deren elektrische Verbindungsstelle den oder einen der Wechselspannungsanschlüsse (L1, L2, L3) der Umrichteranordnung (10) bildet, und die Teilschaltungen (TS) jeweils mindestens zwei in Reihe geschaltete Teilmodule (SM) umfassen, die jeweils mindestens zwei Schalter und einen Kondensator (C) aufweisen, und
   - wobei bei dem Verfahren die Ansteuerung der Teilmodule (SM) und damit das Ein- oder Ausschalten der jeweiligen Kondensatoren (C) der Teilmodule (SM) zumindest auch in Abhängigkeit von der Kondensatorspannung des jeweiligen Kondensators (C) erfolgt,
   **dadurch gekennzeichnet, dass**
   - bei zumindest einer der Teilschaltungen (TS) mindestens ein Kondensator (C) ausschließlich unipolar betrieben wird und mindestens ein Kondensator (C) bipolar betrieben wird,
   - wobei in einem Zeitbereich (ZB), in dem der zeitliche Mittelwert (MW) des Stromes (I) durch die Teilschaltung (TS) ein anderes Vorzeichen als der jeweils aktuelle Strom (I) durch die Teilschaltung (TS) aufweist, der oder die unipolar betriebenen Kondensatoren (C) gegenüber dem oder den bipolar betriebenen Kondensatoren (C) bevorzugt werden, nämlich bevorzugt eingeschaltet werden oder bevorzugt eingeschaltet bleiben.

2. Verfahren nach Anspruch 1,
   **dadurch gekennzeichnet, dass**
   die Ansteuerung der Teilschaltung (TS) in einer Auswahlschleife (100) erfolgt, die wiederholt durchlaufen wird, wobei in der Auswahlschleife (100), insbesondere in einem Spannungsvergleichsschritt (120) der Auswahlschleife (100), ermittelt wird, ob zum Einstellen einer vorgegebenen Teilschaltungssollspannung (Usoll) Kondensatoren (C) zugeschaltet oder abgeschaltet werden müssen.

3. Verfahren nach Anspruch 2,
   **dadurch gekennzeichnet, dass**

   - in der Auswahlschleife (100), insbesondere in einem Sonderbehandlungsprüfungsschritt (130) der Auswahlschleife (100), geprüft wird, ob die Auswahlschleife (100) in dem genannten Zeitbereich (ZB) - also in dem Zeitbereich (ZB), in dem der zeitliche Mittelwert (MW) des Stromes (I) durch die Teilschaltung (TS) ein anderes Vorzeichen als der jeweils aktuelle Strom durch die Teilschaltung (TS) aufweist - durchgeführt wird, und
   - falls dies der Fall ist, die unipolar betriebenen Kondensatoren (C) gegenüber den bipolar betriebenen Kondensatoren (C) in der Auswahlschleife (100) bevorzugt werden, nämlich insbesondere bevorzugt eingeschaltet werden oder bevorzugt eingeschaltet bleiben, und
   - anderenfalls die unipolar betriebenen Kondensatoren (C) und die bipolar betriebenen Kondensatoren (C), die mit derselben Polarität wie die unipolar betriebenen Kondensatoren (C) betrieben werden, in der Auswahlschleife (100) gleich behandelt werden, insbesondere lediglich mit Blick auf ihre Kondensatorspannungen eingeschaltet werden, eingeschaltet bleiben oder abgeschaltet werden.

4. Verfahren nach Anspruch 2 oder 3,
 **dadurch gekennzeichnet, dass**
 in der Auswahlschleife (100)

 - zunächst, insbesondere in einem Sortierlistenschritt (210) der Auswahlschleife (100), eine Sortierliste (L) mit einer Priorisierung der Kondensatoren (C) erstellt wird,
 - in einem Ermittlungsschritt anhand der Priorisierung in der Sortierliste (L) die für das Erreichen der vorgegebenen Teilschaltungssollspannung (Usoll) ab- oder zuzuschaltenden Kondensatoren (C) ermittelt werden und
 - das Ab- oder Zuschalten der Kondensatoren (C) gemäß dem Ermittlungsergebnis des Ermittlungsschritts erfolgt.

5. Verfahren nach Anspruch 4,
 **dadurch gekennzeichnet, dass**

 - im Falle, dass in dem genannten Zeitbereich (ZB) die aktuelle Teilschaltungsspannung die vorgegebene Teilschaltungssollspannung (Usoll) überschreitet, alle eingeschalteten bipolar betriebenen Kondensatoren (C) als mit größerer Priorität abzuschaltende Kondensatoren (C) auf die Sortierliste (L) aufgenommen werden als die eingeschalteten unipolar betriebenen Kondensatoren (C),
 - wobei auf der Sortierliste (L) die Reihenfolge der bipolar betriebenen Kondensatoren (C) untereinander gemäß deren Kondensatorspannung und die Reihenfolge der unipolar betriebenen Kondensatoren (C) untereinander ebenfalls gemäß deren Kondensatorspannung sortiert wird und
 - die endgültige Auswahl der abzuschaltenden Kondensatoren (C) gemäß der Reihenfolge auf der Sortierliste (L) erfolgt - also beginnend mit den bipolar betriebenen Kondensatoren (C) und erst anschließend mit den unipolar betriebenen Kondensatoren (C) -, bis die Summe der Kondensatorspannungen der verbleibenden Kondensatoren (C) der vorgegebenen Teilschaltungssollspannung (Usoll) entspricht, oder zumindest bis auf einen vorgegebenen Restfehler entspricht, oder diese unterschreitet.

6. Verfahren nach Anspruch 4 oder 5,

**dadurch gekennzeichnet, dass**

 - im Falle, dass in dem genannten Zeitbereich (ZB) die aktuelle Teilschaltungsspannung die vorgegebene Teilschaltungssollspannung (Usoll) unterschreitet, alle ausgeschalteten unipolar betriebenen Kondensatoren (C) als mit größerer Priorität einzuschaltende Kondensatoren (C) auf die Sortierliste (L) aufgenommen werden als die ausgeschalteten bipolar betriebenen Kondensatoren (C),
 - wobei die Reihenfolge der unipolar betriebenen Kondensatoren (C) untereinander gemäß deren Kondensatorspannung und die Reihenfolge der bipolar betriebenen Kondensatoren (C) untereinander ebenfalls gemäß deren Kondensatorspannung sortiert wird und
 - die endgültige Auswahl der einzuschaltenden Kondensatoren (C) gemäß der Reihenfolge auf der Sortierliste (L) erfolgt, - also beginnend mit den unipolar betriebenen Kondensatoren (C) und erst anschließend mit den bipolar betriebenen Kondensatoren (C) -, bis die Summe der Kondensatorspannungen der ausgewählten Kondensatoren (C) der vorgegebenen Teilschaltungssollspannung (Usoll) entspricht, oder zumindest bis auf einen vorgegebenen Restfehler entspricht, oder diese überschreitet.

7. Verfahren nach einem der voranstehenden Ansprüche 4 bis 6,
 **dadurch gekennzeichnet, dass**

 - die Auswahl der abzuschaltenden bipolar betriebenen Kondensatoren (C) gemäß deren Kondensatorspannungen erfolgt, wobei die Auswahlrichtung, also ob bipolare Kondensatoren (C) mit größerer Kondensatorspannung gegenüber denen mit kleinerer Kondensatorspannung zuerst ausgewählt werden, in Abhängigkeit von der Leistungsflussrichtung der Umrichteranordnung (10), in Abhängigkeit von der Stromrichtung durch die Teilschaltung (TS) und in Abhängigkeit davon, ob die aktuelle Teilschaltungsspannung die vorgegebene Teilschaltungssollspannung (Usoll) über- oder unterschreitet, festgelegt wird, und
 - die Auswahl der abzuschaltenden unipolar betriebenen Kondensatoren (C) gemäß deren Kondensatorspannungen erfolgt, wobei die Auswahlrichtung, also ob unipolare Kondensatoren (C) mit größerer Kondensatorspannung gegenüber denen mit kleinerer Kondensatorspannung zuerst ausgewählt werden, in Abhängigkeit von der Leistungsflussrichtung der Umrichteranordnung (10), in Abhängigkeit von der Stromrichtung durch die Teilschaltung (TS) und in Abhängigkeit davon, ob die aktuelle Teilschaltungsspannung die vorgegebene Teilschaltungssollspannung (Usoll) über- oder unterschreitet, festgelegt wird.

8. Verfahren nach einem der voranstehenden Ansprüche 2 bis 7,
**dadurch gekennzeichnet, dass**

   - in der Auswahlschleife (100), insbesondere in einem Gruppenbildungsschritt (110) der Auswahlschleife (100), eine fiktive Kondensatorgruppe (KG) gebildet wird, die aus den eingeschalteten uni- und bipolar betriebenen Kondensatoren (C) sowie einer fest vorgegebenen Maximalzahl an auszuwählenden, aber noch ausgeschalteten unipolar betriebenen Kondensatoren (C) zusammengesetzt wird, und
   - die Kondensatorspannungen der fiktiven Kondensatorgruppe (KG), insbesondere in einem Spannungsvergleichsschritt (120) der Auswahlschleife (100), unter Bildung eines fiktiven Spannungswerts (Uf) addiert werden.

9. Verfahren nach Anspruch 8,
**dadurch gekennzeichnet, dass**

   - der fiktive Spannungswert (Uf) als aktuelle Teilschaltungsspannung angesehen wird und als die aktuelle Teilschaltungsspannung für den Vergleich mit der Teilschaltungssollspannung (Usoll) herangezogen wird, insbesondere mit Blick auf die Verfahrensschritte gemäß den Ansprüchen 5 bis 7,
   - die Sortierliste (L) für die fiktive Kondensatorgruppe (KG) erstellt wird und
   - die endgültige Auswahl der abzuschaltenden Kondensatoren (C) gemäß der Reihenfolge auf der Sortierliste (L) erfolgt, bis die Summe der Kondensatorspannungen der verbleibenden Kondensatoren (C) der vorgegebenen Teilschaltungssollspannung (Usoll) entspricht, oder zumindest bis auf einen vorgegebenen Restfehler entspricht, oder diese unterschreitet.

10. Verfahren nach Anspruch 8 oder 9,
**dadurch gekennzeichnet, dass**
die Auswahl der auszuwählenden, aber noch ausgeschalteten unipolar betriebenen Kondensatoren (C) aus der Gesamtgruppe der ausgeschalteten unipolar betriebenen Kondensatoren (C) gemäß deren Kondensatorspannungen erfolgt.

11. Verfahren nach einem der Ansprüche 8 bis 10,
**dadurch gekennzeichnet, dass**
die fiktive Kondensatorgruppe (KG) mit denjenigen abgeschalteten, unipolaren Kondensatoren (C) gebildet wird, die

   - im Falle einer Leistungsflussrichtung der Umrichteranordnung (10) in Richtung der Gleichspannungsanschlüsse (L+, L-) die kleinsten Kondensatorspannungen aufweisen und
   - im Falle einer Leistungsflussrichtung der Umrichteranordnung (10) in Richtung des oder der Wechselspannungsanschlüsse (L1, L2, L3) die größten Kondensatorspannungen aufweisen.

12. Verfahren nach einem der voranstehenden Ansprüche 4 bis 11,
**dadurch gekennzeichnet, dass**

   - in der Auswahlschleife (100), insbesondere in einem Gruppenbildungsschritt (110) der Auswahlschleife (100), eine fiktive Kondensatorgruppe (KG) gebildet wird, die aus den physikalisch eingeschalteten uni- und bipolar betriebenen Kondensatoren (C) sowie einer vorgegebenen Maximalzahl an ausgewählten, aber physikalisch noch ausgeschalteten unipolar betriebenen Kondensatoren (C) zusammengesetzt wird, und
   - bei der Erstellung der Sortierliste (L) alle Kondensatoren (C) der fiktiven Kondensatorgruppe (KG) auf der Sortierliste (L) aufgenommen werden,
   - wobei die ausgewählten, aber physikalisch noch ausgeschalteten unipolar betriebenen Kondensatoren (C) auf der Sortierliste (L) als eingeschaltete, unipolar betriebene Kondensatoren (C), also genauso wie die physikalisch eingeschalteten unipolar betriebenen Kondensatoren (C) behandelt werden.

13. Verfahren nach einem der voranstehenden Ansprüche 4 bis 12,
**dadurch gekennzeichnet, dass**
in der Auswahlschleife (100)

   - in einem Ermittlungsschritt (220) anhand der Sortierung der Sortierliste (L) die für das Erreichen der vorgegebenen Teilschaltungssollspannung (Usoll) ab- oder zuzuschaltenden Kondensatoren (C) ermittelt werden und
   - in einem Umsetzschritt (230) das Ab- oder Zuschalten der Kondensatoren (C) gemäß dem Ermittlungsergebnis des Ermittlungsschritts erfolgt,
   - wobei die ausgewählten, aber physikalisch noch ausgeschalteten unipolar betriebenen Kondensatoren (C) ausgeschaltet bleiben, wenn sie gemäß dem Ermittlungsergebnis auszuschalten wären und eingeschaltet werden, wenn sie gemäß dem Ermittlungsergebnis eingeschaltet bleiben sollen.

14. Verfahren nach einem der voranstehenden Ansprüche 3 bis 12,
**dadurch gekennzeichnet, dass**
die unipolar betriebenen Kondensatoren (C) mit derselben Polarität betrieben werden.

15. Verfahren nach einem der voranstehenden Ansprüche,
**dadurch gekennzeichnet, dass**
die Teilschaltung (TS) mit einem Modulationsindex (M) größer als Eins betrieben wird.

16. Umrichteranordnung (10), die zumindest einen Wechselspannungsanschluss (L1, L2, L3), an dem ein Wechselstrom eingespeist oder entnommen werden kann, und zumindest zwei Gleichspannungsanschlüsse (L+, L-), an denen ein Gleichstrom eingespeist oder entnommen werden kann, aufweist

- wobei die Umrichteranordnung (10) mindestens eine Reihenschaltung (R1, R2, R3) umfasst, deren äußere Anschlüsse die Gleichspannungsanschlüsse (L+, L-) der Umrichteranordnung (10) bilden, die Reihenschaltung (R1, R2, R3) zwei in Reihe geschaltete Teilschaltungen (TS) umfasst, deren elektrische Verbindungsstelle den oder einen der Wechselspannungsanschlüsse (L1, L2, L3) der Umrichteranordnung (10) bildet, und die Teilschaltungen (TS) jeweils mindestens zwei in Reihe geschaltete Teilmodule (SM) umfassen, die jeweils mindestens zwei Schalter und einen Kondensator (C) aufweisen, und
- wobei die Umrichteranordnung (10) eine Steuereinrichtung (20) zum Ansteuern der Teilmodule (SM) aufweist,

**dadurch gekennzeichnet, dass**
die Steuereinrichtung (20) derart ausgestaltet ist, dass sie die Teilmodule (SM) gemäß einem Verfahren nach einem der voranstehenden Ansprüche ansteuern kann.

**Claims**

1. Method for controlling a converter assembly (10) which comprises at least one AC voltage terminal (L1, L2, L3) at which an alternating current may be fed or drawn, and at least two DC voltage terminals (L+, L-) at which a direct current may be fed or drawn,

- wherein the converter assembly (10) comprises at least one series circuit (R1, R2, R3) of which the external terminals form the DC voltage terminals (L+, L-) of the converter assembly (10), the series circuit (R1, R2, R3) comprises two subcircuits (TS) connected in series, of which the electrical connecting point forms the AC voltage terminal or one of the AC voltage terminals (L1, L2, L3) of the converter assembly (10), and the subcircuits (TS) respectively comprise at least two submodules (SM) connected in series, which respectively comprise at least two switches and one capacitor (C), and
- wherein in the method, the control of the submodules (SM), and thus the connection or disconnection of the respective capacitors (C) of the submodules (SM), takes place at least also as a function of the capacitor voltage of the respective capacitor (C),
**characterized in that**
- in at least one of the subcircuits (TS), at least one capacitor (C) is operated exclusively in unipolar mode, and at least one capacitor (C) is operated in bipolar mode,
- wherein in a time range (ZB) in which the temporal average value (MW) of the current (I) flowing through the subcircuit (TS) has a sign which is different from that of the respective instantaneous current (I) flowing through the subcircuit (TS), the capacitor or capacitors (C) operated in unipolar mode are given preference over the capacitor or capacitors (C) operated in bipolar mode, in particular, are preferably connected or preferably remain connected.

2. Method according to Claim 1,
**characterized in that**
the control of the subcircuit (TS) takes place in a selection loop (100) which is executed repeatedly, wherein in the selection loop (100), in particular in a voltage comparison step (120) of the selection loop (100), it is ascertained whether capacitors (C) must be connected or disconnected for setting a predetermined subcircuit setpoint voltage (Usetpoint).

3. Method according to Claim 2,
**characterized in that**

- in the selection loop (100), in particular in a special handling testing step (130) in the selection loop (100), it is checked whether the selection loop (100) is carried out in the aforementioned time range (ZB), i.e., in the time range (ZB) in which the time average (MW) of the current (I) flowing through the subcircuit (TS) has a sign which is different from that of the respectively instantaneous current flowing through the subcircuit (TS), and
- if this is the case, the capacitors (C) operated in unipolar mode are given preference in the selection loop (100) over the capacitors (C) operated in bipolar mode, i.e., in particular they are preferably connected or remain preferably connected, and
- otherwise, the capacitors (C) operated in unipolar mode, and the capacitors (C) operated in bipolar mode which are operated having the same polarity as the capacitors (C) operated in unipolar mode, are handled equally in the selection loop (100), in particular are connected, remain connected, or are disconnected, only with respect to their capacitor voltages.

4. Method according to Claim 2 or 3, **characterized in that** in the selection loop (100),

> - initially, in particular in a sorting list step (210) in the selection loop (100), a sorting list (L) is created having a prioritization of the capacitors (C),
> - in an ascertainment step, based on the prioritization in the sorting list (L), the capacitors (C) which are to be disconnected or connected for achieving the predetermined subcircuit setpoint voltage (Usetpoint) are ascertained, and
> - the disconnection or connection of the capacitors (C) takes place according to the ascertainment result of the ascertainment step.

5. Method according to Claim 4, **characterized in that**

> - in the case that in the aforementioned time range (ZB), the instantaneous subcircuit voltage exceeds the predetermined subcircuit setpoint voltage (Usetpoint), all connected capacitors (C) operated in bipolar mode are added to the sorting list (L) as capacitors (C) to be disconnected, having higher priority than the connected capacitors (C) operated in unipolar mode,
> - wherein in the sorting list (L), the sequence of the capacitors (C) operated in bipolar mode among one another is sorted according to their capacitor voltage, and the sequence of the capacitors (C) operated in unipolar mode among one another is likewise sorted according to their capacitor voltage, and
> - the ultimate selection of the capacitors (C) to be disconnected takes place according to the sequence in the sorting list (L), i.e., beginning with the capacitors (C) operated in bipolar mode and only subsequently with the capacitors (C) operated in unipolar mode, until the sum of the capacitor voltages of the remaining capacitors (C) corresponds to the predetermined subcircuit setpoint voltage (Usetpoint), or at least corresponds up to a predetermined residual error, or falls below said voltage.

6. Method according to Claim 4 or 5, **characterized in that**

- in the case that in the aforementioned time range (ZB), the instantaneous subcircuit voltage falls below the predetermined subcircuit setpoint voltage (Usetpoint), all disconnected capacitors (C) operated in unipolar mode are added to the sorting list (L) as capacitors (C) to be connected, having higher priority than the disconnected capacitors (C) operated in bipolar mode,
- wherein the sequence of the capacitors (C) operated in unipolar mode among one another is sorted according to their capacitor voltage, and the sequence of the capacitors (C) operated in bipolar mode among one another is likewise sorted according to their capacitor voltage, and
- the ultimate selection of the capacitors (C) to be connected takes place according to the sequence in the sorting list (L), i.e., beginning with the capacitors (C) operated in unipolar mode and only subsequently with the capacitors (C) operated in bipolar mode, until the sum of the capacitor voltages of the selected capacitors (C) corresponds to the predetermined subcircuit setpoint voltage (Usetpoint), or at least corresponds up to a predetermined residual error, or exceeds said voltage.

7. Method according to one of the preceding Claims 4 to 6, **characterized in that**

> - the selection of the capacitors (C) which are operated in bipolar mode and which are to be disconnected takes place according to their capacitor voltages, wherein the selection direction, i.e., whether bipolar capacitors (C) having higher capacitor voltage are initially selected over those having lower capacitor voltage, is determined as a function of the power flow direction of the converter assembly (10), as a function of the current direction through the subcircuit (TS), and as a function of whether the instantaneous subcircuit voltage exceeds or falls below the predetermined subcircuit setpoint voltage (Usetpoint), and
> - the selection of the capacitors (C) which are operated in unipolar mode and are to be disconnected takes place according to their capacitor voltages, wherein the selection direction, i.e., whether unipolar capacitors (C) having higher capacitor voltage are initially selected over those having lower capacitor voltage, is determined as a function of the power flow direction of the converter assembly (10), as a function of the current direction through the subcircuit (TS), and as a function of whether the instantaneous subcircuit voltage exceeds or falls below the predetermined subcircuit setpoint voltage (Usetpoint).

**8.** Method according to one of the preceding Claims 2 to 7, **characterized in that**

- in the selection loop (100), in particular in a group formation step (110) in the selection loop (100), a virtual capacitor group (KG) is formed which is made up of the connected capacitors (C) operated in unipolar and bipolar mode, and a fixedly predetermined maximum number of capacitors (C) operated in unipolar mode which are to be selected, but which are still disconnected, and
- the capacitor voltages of the virtual capacitor group (KG) are added while forming a virtual voltage value (Uf), in particular in a voltage comparison step (120) in the selection loop (100).

**9.** Method according to Claim 8, **characterized in that**

- the virtual voltage value (Uf) is considered to be an instantaneous subcircuit voltage and is used as the instantaneous subcircuit voltage for the comparison with the subcircuit setpoint voltage (Usetpoint), in particular with a view to the method steps according to Claims 5 to 7,
- the sorting list (L) is created for the virtual capacitor group (KG), and
- the ultimate selection of the capacitors (C) to be disconnected takes place according to the sequence in the sorting list (L), until the sum of the capacitor voltages of the remaining capacitors (C) corresponds to the predetermined subcircuit setpoint voltage (Usetpoint), or at least corresponds up to a predetermined residual error, or falls below said voltage.

**10.** Method according to Claim 8 or 9, **characterized in that** the selection of the capacitors (C) operated in unipolar mode which are to be selected, but are still disconnected, from the overall group of the disconnected capacitors (C) operated in unipolar mode, takes place according to their capacitor voltages.

**11.** Method according to one of Claims 8 to 10, **characterized in that** The virtual capacitor group (KG) is formed via the disconnected unipolar capacitors (C) which

- have the lowest capacitor voltages in the case of a power flow direction of the converter assembly (10) in the direction of the DC voltage terminals (L+, L-), and
- have the highest capacitor voltages in the case of a power flow direction of the converter assembly (10) in the direction of the AC voltage terminal or terminals (L1, L2, L3).

**12.** Method according to one of the preceding Claims 4 to 11, **characterized in that**

- in the selection loop (100), in particular in a group formation step (110) in the selection loop (100), a virtual capacitor group (KG) is formed which is made up of the physically connected capacitors (C) operated in unipolar and bipolar mode, and a predetermined maximum number of capacitors (C) operated in unipolar mode which are selected but still physically disconnected, and
- when creating the sorting list (L), all capacitors (C) in the virtual capacitor group (KG) are added to the sorting list (L),
- wherein the capacitors (C) operated in unipolar mode which are selected but still physically disconnected in the sorting list (L), are handled like connected capacitors (C) operated in unipolar mode, i.e., exactly like the physically connected capacitors (C) operated in unipolar mode.

**13.** Method according to one of the preceding Claims 4 to 12, **characterized in that** in the selection loop (100),

- in an ascertainment step (220), the capacitors (C) which are to be disconnected or connected for achieving the predetermined subcircuit setpoint voltage (Usetpoint) are ascertained, based on the sorting in the sorting list (L), and
- in an implementation step (230), the disconnection or connection of the capacitors (C) takes place according to the ascertainment result of the ascertainment step,
- wherein the capacitors (C) which are operated in unipolar mode and which are selected but still physically disconnected, remain disconnected if they were to be disconnected according to the ascertainment result, and are connected if they are to remain connected according to the ascertainment result.

**14.** Method according to one of the preceding Claims 3 to 12, **characterized in that** the capacitors (C) operated in unipolar mode are operated having the same polarity.

**15.** Method according to one of the preceding claims, **characterized in that** the subcircuit (TS) is operated having a modulation index (M) greater than one.

**16.** Converter assembly (10) which comprises at least one AC voltage terminal (L1, L2, L3) at which an alternating current may be fed or drawn, and at least two DC voltage terminals (L+, L-) at which a direct current may be fed or drawn,

- wherein the converter assembly (10) comprises at least one series circuit (R1, R2, R3) of which the external terminals form the DC voltage terminals (L+, L-) of the converter assembly (10), the series circuit (R1, R2, R3) comprises two subcircuits (TS) connected in series, of which the electrical connecting point forms the AC voltage terminal or one of the AC voltage terminals (L1, L2, L3) of the converter assembly (10), and the subcircuits (TS) respectively comprise at least two submodules (SM) connected in series, which respectively comprise at least two switches and one capacitor (C), and
- wherein the converter assembly (10) comprises a control device (20) for controlling the submodules (SM),

**characterized in that**
the control device (20) is designed in such a way that it can control the submodules (SM) according to a method according to one of the preceding claims.

**Revendications**

1. Procédé de commande d'un agencement (10) d'onduleur, qui a au moins une borne (L1, L2, L3) de tension alternative où un courant alternatif peut être injecté ou peut être prélevé et au moins deux bornes (L+, L-) de tension continue où un courant continu peut être injecté ou peut être prélevé,

- dans lequel l'agencement (10) d'onduleur comprend au moins un circuit (R1, R2, R3) série, dont les bornes extérieures forment les bornes (L+, L-) de tension continue de l'agencement (10) d'onduleur, le circuit (R1, R2, R3) série comprend deux circuits (TS) partiels montés en série, dont le point de liaison électrique forme la ou l'une des bornes (L1, L2, L3) de tension alternative de l'agencement (10) d'onduleur et les circuits (TS) partiels comprennent chacun au moins deux modules (SM) partiels, qui sont montés en série et qui ont chacun au moins deux interrupteurs et un condensateur (C), et
- dans lequel, dans le procédé, la commande des modules (SM) partiels et ainsi la mise en circuit ou hors circuit des condensateurs (C) respectifs des modules (SM) partiels s'effectue au moins aussi en fonction de la tension du condensateur (C) respectif,
**caractérisé en ce que**
- pour au moins l'un des circuits (TS) partiels, on fait fonctionner au moins un condensateur (C), exclusivement de manière unipolaire, et au moins un condensateur (C) de manière bipolaire,
- dans lequel, dans le laps (ZB) de temps, dans lequel la valeur (MW) moyenne dans le temps du courant (I) dans le circuit (TS) partiel a un signe autre que le courant (I) respectivement en cours dans le circuit (TS) partiel, on préfère le ou les condensateurs (C), fonctionnant de manière unipolaire au ou aux condensateurs (C) fonctionnant de manière bipolaire, à savoir, de préférence, on les met en circuit ou, de préférence, on les laisse en circuit.

2. Procédé suivant la revendication 1,
**caractérisé en ce que**
la commande du circuit (TS) partiel a lieu dans une boucle (100) de sélection parcourue de manière répétée, dans lequel, dans la boucle (100) de sélection, notamment dans un stade (120) de comparaison de tension de la boucle (100) de sélection, on détermine s'il faut, pour le réglage d'une tension (Usoll) de consigne donnée à l'avance de circuit partiel, mettre en circuit ou hors circuit des condensateurs (C).

3. Procédé suivant la revendication 2,
**caractérisé en ce que**

- dans la boucle (100) de sélection, notamment dans un stade (130) de contrôle de traitement particulier de la boucle (100) de sélection, on contrôle si la boucle (100) de sélection est parcourue dans le laps (ZB) de temps mentionné - donc dans le laps (ZB) de temps dans lequel la valeur (MW) moyenne dans le temps du courant (I) dans le circuit (TS) partiel a un signe autre que le courant respectif en cours dans le circuit (TS) partiel -, et
- si cela est le cas, on préfère les condensateurs (C) fonctionnant de manière unipolaire aux condensateurs (C) fonctionnant de manière bipolaire dans la boucle (100) de sélection, à savoir, on préfère notamment les mettre en circuit ou, de préférence, les laisser en circuit, et
- sinon, on traite de la même façon, dans la boucle (100) de sélection, les condensateurs (C) fonctionnant de manière unipolaire et les condensateurs (C) fonctionnant de manière bipolaire, qui fonctionnent à la même polarité que les condensateurs (C) fonctionnant de manière unipolaire, en les mettant en circuit, en les laissant en circuit ou en les mettant hors circuit, notamment simplement au regard de leurs tensions de condensateur.

4. Procédé suivant la revendication 2 ou 3,

**caractérisé en ce que**,
dans la boucle (100) de sélection

- on dresse d'abord, notamment dans un stade (210) de liste de tri de la boucle (100) de sélection, une liste (L) de tri ayant une mise en priorité des condensateurs (C),
- dans un stade de détermination, on détermine, à l'aide de la mise en priorité dans la liste (L) de tri, les condensateurs (C) à mettre hors circuit ou à mettre en circuit pour obtenir la tension (Usoll) de consigne donnée à l'avance de circuit partiel et
- la mise hors circuit ou en circuit des condensateurs (C) s'effectue suivant le résultat de la détermination du stade de détermination.

5.  Procédé suivant la revendication 4,
    **caractérisé en ce que**

- dans le cas où, dans ledit laps (ZB) de temps, la tension en cours du circuit partiel dépasse la tension (Usoll) de consigne donnée à l'avance de circuit partiel, on prend, sur la liste (L) de tri, tous les condensateurs (C) mis en circuit, fonctionnant de manière bipolaire, à mettre hors circuit avec une priorité plus grande que les condensateurs (C) mis en circuit, fonctionnant de manière unipolaire,
- dans lequel, sur la liste (L) de tri, on trie l'ordre des condensateurs (C), fonctionnant de manière bipolaire, entre eux suivant leur tension de condensateur et l'ordre des condensateurs (C), fonctionnant de manière unipolaire entre eux, également suivant leur tension de condensateur et
- le choix définitif des condensateurs (C) à mettre hors circuit s'effectue suivant l'ordre sur la liste (L) de tri - en commençant donc par les condensateurs (C) fonctionnant de manière bipolaire, et seulement ensuite par les condensateurs (C) fonctionnant de manière unipolaire - jusqu'à ce que la somme des tensions des condensateurs (C) restants corresponde à la tension (Usoll) de consigne donnée à l'avance de circuit intermédiaire ou corresponde au moins à une erreur résiduelle près donnée à l'avance, ou lui soit inférieure.

6.  Procédé suivant la revendication 4 ou 5,
    **caractérisé en ce que**

- dans le cas où, dans ledit laps (ZB) de temps, la tension en cours de circuit partiel est inférieure à la tension (Usoll) de consigne donnée à l'avance de circuit partiel, on prend, sur la liste (L) de tri, tous les condensateurs (C) mis hors circuit, fonctionnant de manière unipolaire, comme condensateurs (C) à mettre en circuit avec une priorité plus grande que les condensateurs (C) mis hors circuit, fonctionnant de manière bipolaire,
- dans lequel on trie l'ordre des condensateurs (C) fonctionnant de manière unipolaire entre eux suivant leur tension de condensateur et l'ordre des condensateurs (C) fonctionnant de manière bipolaire entre eux, également suivant leur tension de condensateur et
- le choix définitif des condensateurs (C) à mettre en circuit s'effectue suivant l'ordre sur la liste (L) de tri - en commençant donc par les condensateurs (C) fonctionnant de manière unipolaire et seulement ensuite par les condensateurs (C) fonctionnant de manière bipolaire jusqu'à ce que la somme des tensions des condensateurs (C) sélectionnés corresponde à la tension (Usoll) de consigne donnée à l'avance de circuit intermédiaire ou y corresponde au moins à une erreur résiduelle près donnée à l'avance, ou la dépasse.

7.  Procédé suivant l'une des revendications 4 à 6 précédentes,
    **caractérisé en ce que**

- le choix des condensateurs (C) fonctionnant de manière bipolaire à mettre hors circuit s'effectue suivant leur tension de condensateur, dans lequel on fixe le sens de sélection, donc si l'on choisit d'abord des condensateurs (C) bipolaires ayant une tension de condensateur plus haute que ceux ayant une tension de condensateur plus basse, en fonction de la direction de flux de puissance de l'agencement (10) d'onduleur, en fonction du sens du courant dans le circuit (TS) partiel et en fonction de cela, si la tension en cours de circuit partiel est supérieure ou inférieure à la tension (Usoll) de consigne donnée à l'avance de circuit partiel, et
- la sélection des condensateurs (C) à mettre hors circuit fonctionnant de manière unipolaire s'effectue suivant leurs tensions de condensateur, dans lequel on effectue le sens de sélection, donc si on sélectionne d'abord des condensateurs (C) unipolaires ayant une tension de condensateur plus haute que ceux ayant une tension de condensateur plus basse, en fonction de la direction de flux de puissance de l'agencement (10) d'onduleur, en fonction du sens du courant dans le circuit (TS) partiel et en fonction de cela, si la tension en cours de circuit partiel est supérieure à la tension (Usoll) de consigne donnée à l'avance de circuit partiel.

8.  Procédé suivant l'une des revendications 2 à 7 précédentes,

**caractérisé en ce que**

- dans la boucle (100) de sélection, notamment dans un stade (110) de formation de groupe de la boucle (100) de sélection, on forme un groupe (KG) fictif de condensateurs, qui est composé des condensateurs (C) fonctionnant de manière unipolaire et bipolaire mis en circuit, ainsi que d'un nombre maximum fixe donné à l'avance de condensateurs (C) à sélectionner, fonctionnant de manière unipolaire, mais encore mis hors circuit, et
- on ajoute, en formant une valeur (Uf) de tension fictive, les tensions de condensateur du groupe (KG) fictif de condensateurs, notamment dans un stade (120) de comparaison de tension de la boucle (100) de sélection.

9. Procédé suivant la revendication 8,
   **caractérisé en ce que**

   - on considère la valeur (Uf) fictive de tension comme la tension en cours de circuit partiel et on tire parti de la tension en cours de circuit partiel pour la comparaison avec la tension (Usoll) de consigne de circuit partiel, notamment au regard des stades du procédé suivant les revendications 5 à 7,
   - on dresse la liste (L) de tri pour le groupe (KG) fictif de condensateurs et
   - on effectue la sélection définitive des condensateurs (C) à mettre en circuit suivant l'ordre sur la liste (L) de tri jusqu'à ce que la somme des tensions des condensateurs (C) restants corresponde à la tension (Usoll) de consigne donnée à l'avance de circuit partiel ou au moins y corresponde à une erreur résiduelle près donnée à l'avance, ou lui soit inférieure.

10. Procédé suivant la revendication 8 ou 9,
    **caractérisé en ce que**
    la sélection des condensateurs (C) à sélectionner, fonctionnant de manière unipolaire mais encore mis hors circuit, du groupe total des condensateurs (C) mis hors circuit, fonctionnant de manière unipolaire, s'effectue suivant leurs tensions de condensateur.

11. Procédé suivant l'une des revendications 8 à 10,
    **caractérisé en ce que** l'on forme le groupe (KG) fictif de condensateur par les condensateurs (C) unipolaires mis hors circuit, qui

    - dans le cas d'un sens de flux de puissance de l'agencement (10) d'onduleur, en direction des bornes (L+, L-) de tension continue, ont les tensions de condensateur les plus basses et
    - dans le cas d'un sens de flux de puissance de l'agencement (10) d'onduleur, dans la direc-

tion de la ou des bornes (L1, L2, L3) de tension alternative, on les tensions de condensateur les plus hautes.

12. Procédé suivant l'une des revendications 4 à 11 précédentes,
    **caractérisé en ce que**

    - dans la boucle (100) de sélection, notamment dans le stade (110) de formation de groupe de la boucle (100) de sélection, on forme un groupe (KG) fictif de condensateur, qui est composé des condensateurs (C), fonctionnant de manière unipolaire et bipolaire, mis en circuit physiquement, ainsi que d'un nombre maximum donné à l'avance de condensateurs (C), fonctionnant de manière unipolaire, sélectionnés mais encore mis hors circuit physiquement, et
    - lorsque l'on dresse la liste (L) de tri, on prend tous les condensateurs (C) du groupe (KG) fictif de condensateur sur la liste (L) de tri,
    - dans lequel on traite les condensateurs (C), fonctionnant de manière unipolaire, sélectionnés mais encore mis hors circuit physiquement, sur la liste (L) de tri, comme des condensateurs (C), fonctionnant de manière unipolaire, mis en circuit, donc exactement comme les condensateurs (C), fonctionnant de manière unipolaire, mis en circuit physiquement.

13. Procédé suivant l'une des revendications 4 à 12 précédentes,
    **caractérisé en ce que**
    dans la boucle (100) de sélection

    - dans un stade (220) de détermination, à l'aide du tri de la liste (L) de tri, on détermine les condensateurs (C) à mettre hors circuit ou à mettre en circuit pour obtenir la tension (Usoll) de consigne donnée à l'avance de circuit intermédiaire et
    - dans un stade (230) de conversion, la mise hors circuit ou en circuit des condensateurs (C) s'effectue suivant le résultat de détermination du stade de détermination,
    - dans lequel les condensateurs (C), fonctionnant de manière unipolaire, sélectionnés mais encore mis hors circuit physiquement, restent mis hors circuit s'ils étaient à mettre hors circuit suivant le résultat de la détermination et mis en circuit s'ils devaient rester mis en circuit suivant le résultat de la détermination.

14. Procédé suivant l'une des revendications 3 à 12 précédentes,
    **caractérisé en ce que**
    l'on fait fonctionner les condensateurs (C), fonctionnant de manière unipolaire, à la même polarité.

**15.** Procédé suivant l'une des revendications précédentes,
**caractérisé en ce que**
l'on fait fonctionner le circuit (TS) partiel à un indice (M) de modulation plus grand que un.

**16.** Agencement (10) d'onduleur, qui a au moins une borne (L1, L2, L3) de tension alternative où un courant alternatif peut être injecté ou être prélevé et au moins deux bornes (L+, L-) de tension continue où un courant continu peut être injecté ou prélevé,

- dans lequel l'agencement (10) d'onduleur comprend au moins un circuit (R1, R2, R3) série, dont les bornes extérieures forment les bornes (L+, L-) de tension continue de l'agencement (10) d'onduleur, le circuit (R1, R2, R3) série comprend deux circuits (TS) partiels montés en série, dont le point de liaison électrique forme la ou l'une des bornes (L1, L2, L3) de tension alternative de l'agencement (10) d'onduleur et les circuits (TS) partiels comprennent chacun au moins deux modules (SM) partiels, qui sont montés en série et qui ont chacun au moins deux interrupteurs et un condensateur (C), et
- dans lequel l'agencement (10) d'onduleur a un dispositif (20) de commande pour commander les modules (SM) partiels,

**caractérisé en ce que**
le dispositif (20) de commande est conformé de manière à pouvoir commander les modules (SM) partiels selon un procédé suivant l'une des revendications précédentes.

FIG 1

FIG 2

FIG 3

FIG 4

FIG 5

100

110

KG

Uf = Usoll  120

M > 1
ZB ?  130

300                                                      200

310                                                      210

L                                                        L

320                                                      220

330                                                      230

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012013245 A1

- WO 2005041300 A1

**In der Beschreibung aufgeführte Nicht-Patentliteratur**

- **R. MARQUARDT.** *The 2010 International Power Electronics Conference,* 502-507

- ELECTRIC UTILITY DEREGULATION AND RESTRUCTURING AND POWER TECHNOLOGIES (DRPT). **LANHUA ZHANG et al.** 2011 4TH INTER-NATIONAL CONFERENCE ON. IEEE